# EUROPÄISCHE PATENTSCHRIFT

(11) **EP 2 227 355 B1**
(45) Veröffentlichungstag und Bekanntmachung des Hinweises auf die Patenterteilung: **20.07.2011**
(21) Anmeldenummer: 08867673.9
(22) Anmeldetag: 03.11.2008
(51) Int. Cl.: B25F 5/02, B23D 49/10, B27B 9/04

(54) **HANDWERKZEUGMASCHINE, INSBESONDERE FÜR EIN GEFÜHRTES, ZU EINER ZERSPANUNG EINES WERKSTÜCKS VORGESEHENES WERKZEUG**
HAND-HELD MACHINE TOOL, ESPECIALLY FOR A GUIDED TOOL USED FOR MACHINING A WORKPIECE
MACHINE-OUTIL PORTATIVE, EN PARTICULIER POUR UN OUTIL GUIDÉ DESTINÉ À UN TRAVAIL PAR ENLÈVEMENT DE COPEAUX SUR UNE PIÈCE

(30) Priorität: 21.12.2007 DE 102007062261
(43) Veröffentlichungstag der Anmeldung: 15.09.2010
(73) Patentinhaber: Robert Bosch GmbH, 70442 Stuttgart (DE)
(72) Erfinder: SCHNEIDER, Bettina, 71642 Ludwigsburg (DE); SCHNEIDER, Marcus, 71642 Ludwigsburg (DE)
(86) Internationale Anmeldenummer: PCT/EP2008/064858
(87) Internationale Veröffentlichungsnummer: WO 2009/083312

(56) Entgegenhaltungen:
- FR-A- 2 795 990
- US-A1- 2005 160 607
- US-B1- 6 568 088

## Beschreibung

### Stand der Technik

Die Erfindung geht aus von einer Handwerkzeugmaschine, insbesondere für ein geführtes, zu einer Zerspanung eines Werkstücks vorgesehenes Werkzeug nach dem Oberbegriff des Anspruchs 1, wie sie aus der US 2005/160607, der FR2795990 und der US 6568088 bekannt ist.

Es ist bereits vorgeschlagen worden eine Handwerkzeugmaschine, insbesondere für ein geführtes, zu einer Zerspanung eines Werkstücks vorgesehenes Werkzeug, vorzusehen, die eine Lagereinheit und eine Seitenführungseinheit aufweist.

### Vorteile der Erfindung

Die Erfindung geht aus von einer Handwerkzeugmaschine, insbesondere für ein geführtes, zu einer Zerspanung eines Werkstücks vorgesehenes Werkzeug, mit einer Lagereinheit, die zu einer Lagerung und zu einer Abstützung der Handwerkzeugmaschine vorgesehen ist, und mit einer Seitenführungseinheit, wobei die Lagereinheit zumindest teilweise einstückig mit der Seitenführungseinheit ausgebildet ist und wobei die Seitenführungseinheit und die Lagereinheit zumindest einen Rotationskörper aufweisen.

Es wird vorgeschlagen, dass die Handwerkzeugmaschine eine Verstelleinheit aufweist, die dazu vorgesehen ist, eine Vorzugsrichtung des zumindest einen Rotationskörpers einzustellen. Eine Handwerkzeugmaschine stellt hier bevorzugt eine Stichsäge, eine Fräse und/oder eine Oberfräse dar.

Es ist aber auch jede andere Werkzeugmaschine denkbar, die ein geführtes, zu einer Zerspanung eines Werkstücks, wie ein Metall- bzw. ein Metalllegierungs-; ein Holz- und/oder ein Kunststoffobjekt, vorgeschenes Werkzeug, wie ein Sägeblatt und/oder ein Fräser, aufweist. In diesem Zusammenhang soll unter einer "Lagereinheit" insbesondere eine Einheit, wie ein Ablage- und/oder ein Führungsmittel, verstanden werden, die zu einer Lagerung und/oder zu einer Abstützung und/oder zu einer Führung der Handwerkzeugmaschine vorgesehen ist. Unter einer "Seitenführungseinheit" soll hier insbesondere eine Einheit verstanden werden, die bei einer Bewegung des Werkzeugs in eine bestimmte Vorzugsrichtung eine ungewollte Abweichung quer zur Vorzugsrichtung zumindest reduziert und oder besonders vorteilhaft verhindert. Die Wendung "einstückig" definiert hierbei, dass die Lagereinheit und die Seitenführungseinheit einteilig und insbesondere als ein Bauteil bzw. untrennbar voneinander ausgeführt sind und/oder dass sie nur mit einem Funktionsverlust getrennt werden können. Der Zusatz "telweise" bedeutet hierbei, dass es auch möglich ist, dass nur Komponenten der Einheiten einstückig miteinander ausgeführt sind. Unter einem "Rotationskörper" soll hier insbesondere ein Körper verstanden werden, der durch eine Rotation einer erzeugten Kurve um eine Rotationsachse gebildet wird. In diesem Zusammenhang soll unter einer "Verstelleinheit" insbesondere eine Einheit, wie ein mechanischer Übersetzungsmechanismus, in der Form eines Getriebes und/oder eines Gestänges, und/oder ein elektromagnetischer Servomechanismus und/oder ein anderer, dem Fachmann als zweckdienlich erscheinender Übersetzungsmechanismus, verstanden werden, die eine Orientierung des Rotationskörpers so einstellt, dass dieser in eine bevorzugte Bewegungsrichtung, nämlich der Vorzugsrichtung, bewegt werden kann. Durch die erfindungsgemäße Ausgestaltung kann eine besonders präzise Führung der Werkzeugmaschine erreicht und dadurch ein exakter Schnitt realisiert werden. Durch die Ausgestaltung der Seitenführungseinheit als Rotationskörper kann eine Bewegung der Handwerkzeugmaschine einfach realisiert werden. Ferner kann besonders vorteilhaft eine exakte Führung und eine einfache Bedienbarkeit des Werkzeugs gestaltet werden. Ferner weist die Verstelleinheit vorteilhafterweise einen Aktor auf, der zu einer Signalweitergabe dient. Des Weiteren kann durch die erfindungsgemäße Ausgestaltung eine Anpassung der Orientierung der Rotationskörper verschleißarm gestaltet werden.

Des Weiteren wird vorgeschlagen, dass der Rotationskörper von einem Wälzkörper gebildet ist. Unter einem "Wälzkörper" soll hier insbesondere ein Körper, wie eine Kugel, eine Tonne, eine Nadel, ein Kegel und/oder besonders vorteilhaft eine Rolle und/oder ein Rad, verstanden werden, der die Reibung zwischen Komponenten eines Lagers und/oder einer Führung des Werkzeugs bzw. der Handwerkzeugmaschine reduziert und/oder eine relative Bewegung des Werkzeugs bzw. der Hand-werkzeugmaschine gegenüber einer Führungsfläche, wie eine Oberfläche des Werkstücks, erleichtert. Grundsätzlich wäre jedoch auch ein anderer, dem Fachmann als zweckdienlicher erscheinender Rotationskörper denkbar. Der Rotationskörper bzw. der Wälzkörper kann aus Stahl, Keramik, Gummi und/oder einem Kunststoff, insbesondere einem gehärteten Kunststoff, gefertigt sein. Bevorzugt weist der Rotationskörper eine griffige Oberfläche, beispielsweise in der Form eines Gummiüberzugs oder einer anderen griffigen Beschichtung auf, wodurch eine gute Haftung auf der Oberfläche des Werkstücks gewährleistet werden kann. Eine "Rolle" definiert hierbei einen Körper, wie beispielsweise eine Walze, der eine Längserstreckung aufweist, die vorzugsweise größer ist als ein Durchmesser der Rolle. Mittels einer Rolle kann ein Wälzkörpers mit einer vorteilhaft breiten Führungsfläche bereitgestellt werden. Ferner soll in diesem Zusammenhang unter einem "Rad" ein Körper verstanden werden, der eine Längserstreckung aufweist, die vorzugsweise kleiner ist als ein Durchmesser des Rads. Die Ausgestaltung eines Wälzkörpers als Rad bietet einen Körper, der eine vorteilhaft richtungsweisende Längserstreckung hat. Eine Ausrichtung des Wälzkörpers kann vorteilhaft genutzt werden, um eine Ausrichtung des Werkzeugs bzw. der Handwerkzeugmaschine zu beeinflussen, wodurch wiederum eine Schnittrichtung vorgeben werden kann. Durch die erfindungsgemäße Ausgestaltung können ein ungewolltes Verdrehen und/oder ein Verschieben aus einer Bewegungsspur der Handwerkzeugmaschine und dadurch ein Drehen der Handwerkzeugmaschine um eine Werkzeughochachse und/oder ein seitliches Verschieben der Handwerkzeugmaschine und/oder des Werkzeugs vorteilhaft vermindert und besonders vorteilhaft vermieden werden.

Ferner ist es vorteilhaft, wenn eine Schwenkeinheit angeordnet ist, die dazu vorgesehen ist, zumindest einen Rotationskörper um eine Schwenkachse neben seiner Drehachse zu bewegen. Eine "Schwenkeinheit" definiert hierbei eine Einheit, die Komponenten, wie beispielsweise ein Gestänge und/oder ein Getriebe und/oder ein Bedienhebel aufweist, die zu einer Schwenkbewegung des Rotationskörpers vorgesehen sind, wobei unter "vorgesehen" speziell ausgestattet und /oder ausgelegt verstanden werden soll. Grundsätzlich ist aber auch eine andere Einheit, die dem Fachmann als zweckdienlich für eine Schwenkbewegung erscheint, denkbar. In diesem Zusammenhang soll unter einer "Drehachse" eine Achse, insbesondere eine Rotationsachse, in der Form einer Geraden verstanden werden, um die sich der Rotationskörper in einer Bewegung dreht. Unter einer "Schwenkachse" soll hier insbesondere eine Achse verstanden werden, die im Wesentlichen senkrecht zu der Drehachse des Rotationskörpers und parallel zu einer Flächennormalen einer Rollebene des Rotationskörpers verläuft, wobei der Rotationskörper eine Schwenkbewegung ausführt, die um maximal 45° von der Drehachse abweicht. Durch die Realisierung der Schwenkeinheit kann ein Einstellen und ein Anpassen einer Vorzugsbewegungsrichtung der Handwerkzeugmaschine konstruktiv einfach erreicht werden.

In einer weiteren Ausgestaltung der Erfindung weißt die Handwerkzeugmaschine eine Arretiereinheit auf, die dazu vorgesehen ist, zumindest einen Rotationskörper zu arretieren. Unter einer "Arretiereinheit" soll in diesem Zusammenhang eine Einheit verstanden werden, die beispielsweise ein Feststellmittel, wie einen Bolzen und/oder eine Klemmschelle- und/oder-schraube, aufweist und/oder den Rotationskörper arretiert und/oder eine Schwenkbewegung des Rotationskörpers unterbindet. Die Arretiereinheit kann mit einem Werkzeug, wie beispielsweise einem Schraubendreher, zu einem Feststellen und/oder zu einem Lösen der Schwenkeinheit des Rotationskörpers bedient werden. Mittels der Arretiereinheit kann konstruktiv einfach und zuverlässig zumindest ein Betriebszustand der Handwerkzeugmaschine bereitgestellt werden, bei dem eine bevorzugte Bewegungsrichtung der Handwerkzeugmaschine festgelegt bzw. fix eingestellt werden kann.

Ferner wird vorgeschlagen, dass eine Federeinheit angeordnet ist, die dazu vorgesehen ist, zumindest einen Rotationskörper federnd zu lagern. Unter einer "Federeinheit" soll in diesem Zusammenhang insbesondere eine Einheit verstanden werden, die ein Federelement, wie beispielsweise eine Feder und/oder ein federelastisches Bauteil, aufweist und/oder den Rotationskörper in zumindest einer Richtung, die parallel zu einer Flächennormalen der Rollebene des Rotationskörpers verläuft, federt. Hierbei beträgt ein Federweg gegenüber einer maximalen 100 %igen Auslenkung der Rotationskörper in vertikaler Richtung, die in einem unbelasteten Zustand der Handwerkzeugmaschine auftritt, bevorzugt 40 %, besonders vorteilhaft 70 % und besonders bevorzugt 100 %, wodurch zumindest ein Punkt auf einer Oberfläche zumindest eines Rotationskörpers auf derselben Ebene liegt wie eine Oberfläche einer Gleitplatte der Handwerkzeugmaschine. Ferner können über die Federeinheit auch weitere Bauteile wie die Aufhängung der Rotationskörper federnd gelagert sein. Durch die Anordnung der Federeinheit kann eine Führungsfunktion der Rotationskörper eine Tragefunktion der Rotationskörper überlagern, da ein Führungsmittel, wie etwa die Grundplatte, der Handwerkzeugmaschine bis auf die Oberfläche des Werkstücks gepresst werden kann. Ferner kann eine flexible Führung erreicht werden, die Unebenheiten einer Rollebene der Rotationskörper konstruktiv einfach ausgleichen kann. Weiterhin ergibt sich vorteilhaft eine Bauteil schonende Lagerung.

Des Weiteren kann es vorteilhaft sein, wenn die Handwerkzeugmaschine zumindest eine Grundplatte aufweist, an der zumindest zwei Rotationskörper an zumindest zwei unterschiedlichen Positionen beabstandet zueinander in einer Längserstreckungsrichtung der Grundplatte angeordnet sind. Hierbei stellt die "Grundplatte" eine Lagereinheit dar, die eine Gleitfläche für die Handwerkzeugmaschine auf der Oberfläche des Werkstücks bildet, wenn ein Bediener eine Anpresskraft auf die Handwerkzeugmaschine aufbringt. Ferner dient sie zu einer Abstützung der Handwerkzeugmaschine. Unter der Wendung "an unterschiedlichen Positionen beabstandet zueinander in einer Längserstreckungsrichtung der Grundplatte" sollen hier insbesondere Bereiche definiert werden, die in einer Längserstreckungsrichtung der Grundplatte hintereinander und mit einem Abstand voneinander angeordnet sind. Die Positionen sind bevorzugt in einem, bezüglich der Längserstreckung der Grundplatte gesehenen, vorderen und hinteren Bereich der Grundplatte angeordnet, wobei sich der Bereich im hinteren Teil der Grundplatte von einem hinteren Rand der Grundplatte bis zu einem Bereich einer Ausnehmung zum Durchtritt des Werkzeugs erstreckt und der Bereich im vorderen Teil der Grundplatte sich bis zu einem Drittel, ausgehend von einem vorderen Rand der Grundplatte entgegen der Längserstreckungsrichtung, in die Grundplatte erstreckt. Durch die erfindungsgemäße Ausgestaltung kann eine sicherere Führung mit einem ausgewogenen und ruhigen Lauf der Rotationskörper erreicht werden.

Zudem wird vorgeschlagen, dass die Handwerkzeugmaschine zumindest ein Bedienelement aufweist, das dazu vorgesehen ist, zumindest die Verstelleinheit einzustellen. In diesem Zusammenhang soll unter einem "Bedienelement" insbesondere ein Element, wie beispielsweise ein Hebel und/oder ein Knopf verstanden werden, mittels dem insbesondere eine vom Bediener beabsichtigte Reaktion, wie beispielsweise das Schwenken der Verstelleinheit und damit das Schwenken des Rotationskörpers, an die Verstelleinheit übermittelt werden kann. Das Bedienelement kann zusätzlich zu einem Bedienen der Arretiereinheit genutzt werden. Durch die Anordnung des Bedienelements kann eine direkte und robuste Aktivierung der Verstelleinheit erreicht werden.

Vorteilhafterweise ist zumindest eine Eingabeeinheit angeordnet, die dazu vorgesehen ist, zumindest einen Einstellparameter an zumindest die Verstelleinheit weiterzuleiten. Unter einer "Eingabeeinheit" soll hier insbesondere eine Einheit in der Form eines Schalters und/oder eines Auswahlschalters und/oder eines Bedienfelds, beispielsweise in der Form eines Touchscreens mit Display, mit einer nachgeschalteten Recheneinheit verstanden werden, mittels der beispielsweise ein Einstellparameter, wie eine Ausrichtung des Werkzeugs, und/oder ein Kurvenparameter und/oder eine Abfolge der Einstellparameter, wie die Einstellung des Werkzeugs mit Winkelabweichungen von einer Referenzmarkierung, an die Verstelleinheit übermittelt werden. Es wäre jedoch auch die Ü bermittlung eines Einstellparameters an andere Einheiten, wie beispielsweise an eine Steuereinheit, denkbar. Durch die erfindungsgemäße Ausgestaltung kann die Einstellung einer bestimmten Schnittführung und/oder eine Abfolge von Schnittführungen der Handwerkzeugmaschine bzw. des Werkzeugs beispielsweise einem Ausführen komplizierterer Schnitte und/oder Schnittrichtungs- und Schnittformenwechsel konstruktiv einfach, zuverlässig und bedienerfreundlich gestaltet werden.

Eine bevorzugte Weiterbildung besteht darin, dass zumindest ein mit zumindest der Verstelleinheit in Kontakt stehendes Steuermittel, das dazu vorgesehen ist, zumindest eine Ausrichtung zumindest eines Rotationskörpers mittels der Einstelleinheit automatisch einzustellen, angeordnet ist. Unter einem "Steuermlittel" soll hier insbesondere eine Einheit verstanden werden, die Steuersignale und/oder Steuerdaten an die Verstelleinheit zum Verstellen dieser leiten kann. Unter "automatisch" soll hier eine Reaktion verstanden werden, die selbsttätig abläuft und/oder ein automatisierter Ablauf, wie eine Interpolation und/oder weitere, dem Fachmann als sinnvoll erscheinende Automatisierungsprozesse. Das Steuermittel kann mit der Steuereinheit, die Einstellparameter an die Verstelleinheit übermittelt, einstückig ausgeführt sein. Alternativ weist das Steuermittel eine Recheneinheit auf und/oder wird nur durch diese gebildet. Durch die Anordnung des Steuermittels kann ein schneller und zuverlässiger Bedienablauf mit hohem Bedienkomfort bereitgestellt werden.

Es wird zudem vorgeschlagen, dass die Handwerkzeugmaschine eine Erfassungseinheit aufweist, die dazu vorgesehen ist, zumindest einen Einstellparameter zu erfassen und/oder an das Steuermittel weiterzuleiten. Unter einer "Erfassungseinheit" soll hier insbesondere eine Einheit, wie beispielsweise zumindest ein Sensor, eine Kamera und/oder eine weitere, dem Fachmann als zweckdienlich erscheinende Einheit, verstanden werden, die zum Erfassen von Informationen und/oder Signalen geeignet ist und/oder die die erfassten Signale bzw. Informationen an die sie weiterverarbeitende Einheit, wie die Steuereinheit, weiter leiten kann. Hierzu kann die Erfassungseinheit auch eine Recheneinheit aufweisen. Die Erfassungseinheit kann an der Handwerkzeugmaschine und/oder an einer weiteren Bezugseinheit angeordnet sein. Ein "Einstellparameter" definiert hierbei insbesondere eine Information, die eine Eigenschaft, wie eine Position, eine Entfernung und/oder eine andere Eigenschaft, einer Bezugseinheit betrifft. Der Einstellparameter wird von der Steuereinheit ausgewertet und es wird beispielsweise eine Winkelabweichung bestimmt und/oder berechnet. Alternativ kann auch eine Position der Handwerkzeugmaschine bzw. die Ausrichtung der Rollkörper zu einer Berechnung der Winkelabweichung herangezogen werden, in dem beispielsweise die eigene Position gegenüber der Position der Bezugseinheit ermittelt wird. Durch die erfindungsgemäße Ausgestaltung kann vorteilhaft erreicht werden, dass eine information und/oder ein Signal schnell, präzise und bedienerunabhängig erfasst wird.

Des Weiteren wird vorgeschlagen, dass die Handwerkzeugmaschine zumindest ein Übertragungsmittel aufweist, das dazu vorgesehen ist, zumindest einen Einstellparameter auf zumindest das Steuermittel zu übertragen. In diesem Zusammenhang soll unter einent "Übertragungsmittel" insbesondere ein Mittel verstanden werden, das Informationen mechanisch, optisch und/oder mittels einer anderen, dem Fachmann als sinnvoll erscheinenden Übertragungsart, wie beispielsweise einer kontaktlosen Übertragungsart mittels Funkwellen, Radar, Infrarot und/oder Ultraschall, übermitteln kann. Ein mechanisches Übertragungsmittel kann beispielsweise eine unter mechanischer Spannung stehende Zugschnur darstellen. Wohingegen ein optisches Übertragungsmittel bevorzugt zumindest ein gerichteter Lichtstrahl ist-Die Übertragung kann direkt auf das Steuermittel oder über eine weitere Einheit, wie beispielsweise der Erfassungseinheit, auf das Steuermittel erfolgen. Eine Abwicklung der Zugschnur kann an der Handwerkzeugmaschine und/oder an einer Bezugseinheit federnd erfolgen. Durch eine Verwendung des Übertragungsmittels kann eine robuste Informations- und/oder Signalübertragung gestaltet werden.

Eine bevorzugte Weiterbildung besteht darin, dass zumindest eine Bezugseinheit angeordnet ist, die dazu vorgesehen ist, ein Bezugssignal für die Erfassungseinheit zu bilden. Unter einer "Bezugseinheit" soll hier insbesondere eine Einheit verstanden werden, die einen Bezugspunkt, wie eine Linie, einen Code und/oder insbesondere einen Endpunkt einer Soll-Schnittlinie, darstellt. Ein "Bezugssignal" definiert hierbei zum einen die Bezugseinheit selbst und/oder zum anderen ein von der Bezugseinheit gebildetes Signal. Die Bezugseinheit kann, ebenso wie die Handwerkzeugmaschine selbst, Einheiten zum Senden und/oder zum Empfangen und/oder zum Verarbeiten von Signalen aufweisen. Ferner kann die Bezugseinheit eine Oberfläche aufweisen, die dazu vorgesehen ist, Licht zurückzuwerfen bzw. zu reflektieren. Diese Oberfläche ist bevorzugt durch einen Reflektor gebildet. Die Bezugseinheit dient der Handwerkzeugmaschine als Referenzmarke, wodurch vorteilhafterweise ein klares Bezugssystem geschaffen werden kann.

In einer weiteren Ausgestaltung weist die Handwerkzeugmaschine eine Detektoreinheit auf, die dazu vorgesehen ist, eine auf ein zu bearbeitendes Werkstück aufgebrachte Markierung zu detektieren. Unter einer "Detektoreinheit" soll eine Einheit, wie eine Kamera, ein Kontrastsensor, ein Wirbelstromsensor und/oder eine andere, dem Fachmann als zweckdienlich erscheinende, Sensoreinheit, verstanden werden, die zu einer optischen Erfassung einer auf das Werkstück aufgebrachten Markierung in der Form eines Bleistiftstrichs und/oder einer Einkerbung und/oder einer weiteren Profilierung, dient. Die Detektoreinheit setzt sich bevorzugt aus mehreren Sensoren zusammen, die in einer Erstreckung der Handwerkzeugmaschine in ihrer Breite nebeneinander, bevorzugt in einem Kreisbogen, angeordnet sind. Jeder der Sensoren weist einen Sensorbereich auf, der in Richtung der Markierung sensitiv ist und der sich von den Sensorbereichen der anderen Sensoren unterscheidet. Somit erfasst jeder Sensor einen Teilbereich eines Detektionsbereichs in dem die Markierung bzw. die Soll-Schnittlinie verläuft. Die von der Detektoreinheit erfassten Informationen können von einer Auswerteeinheit, die mit der Recheneinheit des Steuermittels, das mit der Verstelleinheit in Kontakt steht, identisch sein kann, ausgewertet werden. Je nachdem welcher der Sensoren das Signal empfangen hat, wird eine Winkelabweichung bestimmt und/oder berechnet und von der Recheneinheit an das Steuermittel und die Verstelleinheit zum Ausrichten der Rotationskörper weitergeleitet. Durch ein Vorsehen der Detektoreinheit kann konstruktiv einfach eine Soll-Schnittlinie verfolgt werden.

Des Weiteren kann es vorteilhaft sein, wenn die Handwerkzeugmaschine eine Projektionsvorrichtung aufweist, die dazu vorgesehen ist, eine Markierung auf ein Werkstück zu projizieren. In diesem Zusammenhang soll unter einer "Projektionsvorrichtung" insbesondere eine Vorrichtung, beispielsweise in der Form eines Lasers, verstanden werden, die bevorzugt mittels Lichtstrahlung eine Markierung, wie eine Linienführung, auf dem Werkstück darstellt und somit die gewünschte Soll-Schnittline zeigt. Durch die Verwendung der Projektionseinheit kann ein Bediener der Handwerkzeugmaschine konstruktiv einfach und bedienerfreundlich einen Schnittverlauf einsehen und überprüfen.

Zudem wird vorgeschlagen, dass die Handwerkzeugmaschine eine Stelleinheit aufweist, die dazu vorgesehen ist, zu einem Einstellen des Werkzeugs zumindest einen Einstellparameter von einer Steuereinheit zu beziehen. Unter einer "Stelleinheit" soll in diesem Zusammenhang insbesondere eine Einheit verstanden werden, die einen mechanischen Übersetzungsmechanismus und/oder einen elektromagnetischen Servomechanismus aufweist und mittels der eine Ausrichtung des Werkzeugs analog zu der Ausrichtung der Rotationskörper eingestellt werden kann. Ferner kann die Stelleinheit eine Recheneinheit aufweisen, die mit einer Steuereinheit, die identisch zum Steuermittel sein kann, in Kontakt steht und von dieser die Einstellparameter bezieht. Durch die erfindungsgemäße Ausgestaltung der Stelleinheit kann ein spannungsfreies Bearbeiten des Werkstücks erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Seitenfüh- rungseinheit in einer schematischen Darstellung von der Seite,
- Fig. 2: die Handwerkzeugmaschine der Figur 1 in einer Sicht von unten,
- Fig. 3: die Handwerkzeugmaschine der Figur 1 und ein zu bearbeitendes Werk- stück in einer Sicht von oben,
- Fig. 4: eine Handwerkzeugmaschine mit einer alternativen Seitenführungseinheit in einer schematischen Darstellung von der Seite,
- Fig. 5: die Handwerkzeugmaschine der Figur 4 in einer Sicht von unten,
- Fig. 6: eine Handwerkzeugmaschine mit einer Seitenführungseinheit und einem alternativen Übertragungsmittel in einer schematischen Darstellung von der Seite,
- Fig. 7: eine Handwerkzeugmaschine mit einer Seitenführungseinheit und mit einer Detektoreinheit in einer schematischen Darstellung von der Seite und
- Fig. 8: die Handwerkzeugmaschine der Figur 7 in einer Sicht von unten.

### Beschreibung der Ausführungsbeispiele

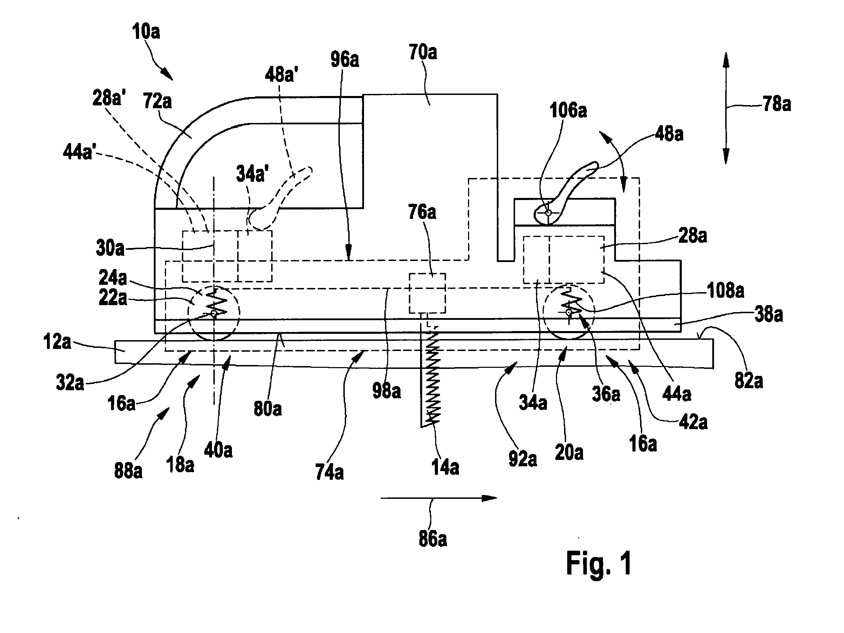

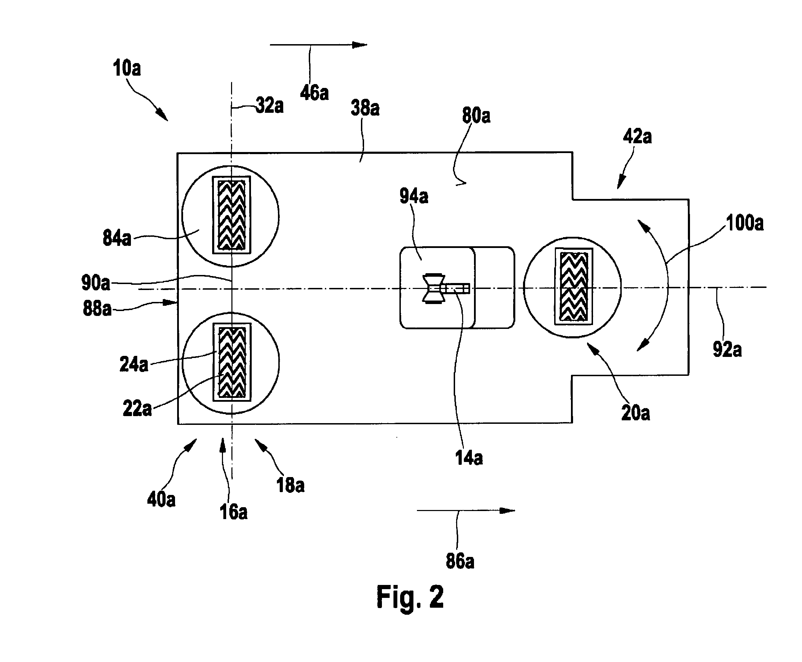

In Figur 1 ist eine von einer Stichsäge ausgebildete Handwerkzeugmaschine 10a in einer Seitenansicht dargestellt. Die Stichsäge umfasst ein Gehäuse 70a und einen im Gehäuse 70a integrierten Handgriff 72a. In einem vom Handgriff 72a abgewandten Bereich 74a ist eine Werkzeugaufnahme 76a angeordnet, die ein geführtes, zu einer Zerspanung eines Werkstücks 12a vorgesehenes Werkzeug 14a in der Form eines Sägeblatts trägt. Ferner ist an die Handwerkzeugmaschine 10a im Bereich 74a eine Lagereinheit 16a angeordnet, die einstückig mit einer Seitenführungseinheit 18a ausgebildet ist. Die Lagereinheit 16a bzw. die Seitenführungseinheit 18a weist drei Rotationskörper 20a auf, die jeweils von einem Wälzkörper 22a, der eine Rolle 24a darstellt, gebildet sind. Ferner ist im Bereich 74a eine Grundplatte 38a an der Handwerkzeugmaschine 10a angeordnet, die im Falle eines Aufbringens einer Anpresskraft durch einen Bediener in einer vertikalen Richtung 78a, die in eine Richtung des Werkstücks 12a weist, die Handwerkzeugmaschine 10a auf dem Werkstück 12a lagert und mit einer Oberfläche eine Gleitfläche 80a für die Handwerkzeugmaschine 10a auf einer Oberfläche 82a des Werkstücks 12a bildet. An der Grundplatte 38a sind drei Rotationskörper 20a an zwei unterschiedlichen Positionen 40a, 42a der Grundplatte 38a angeordnet, wobei die Positionen 40a, 42a, in einer Längserstreckungsrichtung 86a der Grundplatte 38a gesehen, beabstandet zueinander angeordnet sind. Wie in Figur 2 gezeigt ist, weist die Grundplatte 38a hierfür Ausnehmungen 84a auf, aus denen die Rotationskörper 20a in vertikaler Richtung 78a in Richtung des Werkstücks 12a über die Gleitfläche 80a der Grundplatte 38a in einem Zustand, in dem die Grundplatte 38a mit einem Abstand zum Werkstück 12a angeordnet ist, heraustreten. An der Position 40a, die sich in einem in einer Längserstreckungsrichtung 86a gesehen hinteren Bereich 88a der Werkzeugmaschine 10a befindet, sind zwei Rotationskörper 20a so nebeneinander angeordnet, so dass ihre Drehachsen 32a auf einer Geraden 90a liegen. Dahingegen befindet sich an der Position 42a, die in einem in der Längserstreckungsrichtung 86a gesehen vorderen Bereich 92a der Werkzeugmaschine 10a angeordnet ist, ein auf einer Symmetrieachse 92a mittig angeordneter Rotationskörper 20a. Ferner weist die Grundplatte 38a im Bereich der Werkzeugaufnahme 76a eine Ausnehmung 94a auf, durch die das Werkzeug 14a durchtritt.

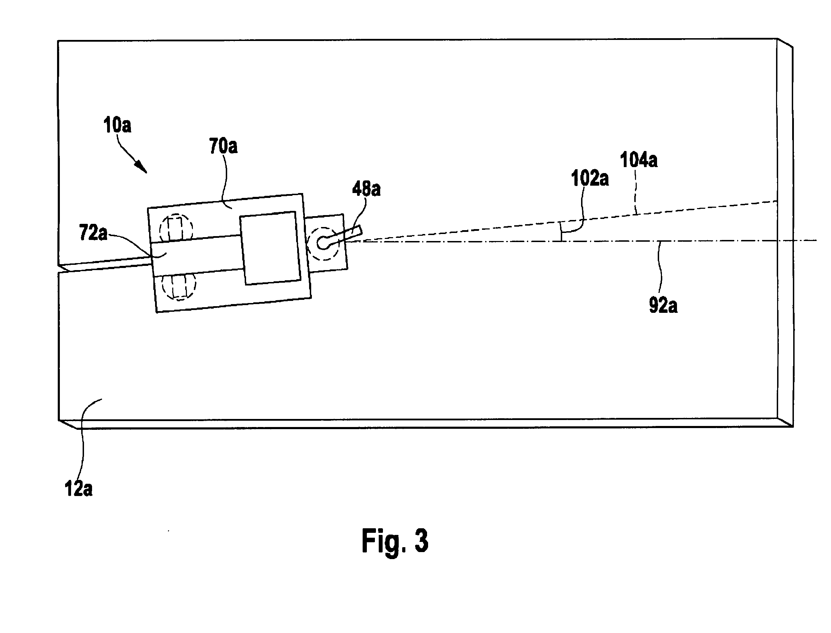

Die Rotationskörper 20a sind Bestandteile einer in der Handwerkzeugmaschine 10a angeordneten Stellvorrichtung 96a, die zudem eine Schwenkeinheit 28a, eine Arretiereinheit 34a, eine Federeinheit 36a, eine Verstelleinheit 44a und ein Bedienelement 48a umfasst. Die Schwenkeinheit 28a ist einstückig mit der Verstelleinheit 44a ausgebildet und ist dazu vorgesehen den Rotationskörper 20a um eine Schwenkachse 30a neben seiner Drehachse 32a zu bewegen. Die Verstelleinheit 44a ist dazu vorgesehen, eine Vorzugsrichtung 46a der Rotationskörper 20a einzustellen und wird von dem Bedienelement 48a bedient. Des Weiteren weist die Verstelleinrichtung 44a zur Einstellung der Rotationskörper 20a einen hier nicht näher beschriebenen Aktor auf. Die Vorzugsrichtung 46a erstreckt sich im Wesentlichen senkrecht zu einer Ebene, die durch die Schwenkachse 30a und die Drehachse 32a aufgespannt wird. Ferner hat die Verstelleinheit 44a einen mechanischen Übersetzungsmechanismus in der Form eines Getriebes, das die hinteren Rotationskörper 20a mit dem vorderen Rotationskörper 20a über ein Gestänge 98a verbindet. Das Bedienelement 48a ist durch einen Hebel gebildet, der durch einen Bediener in einem Schwenkbereich 100a um einen gewünschten Stellwinkel 102a in einem 1:1 Umsetzungsverhältnis verstellt werden kann (siehe Figur 3). Es wäre jedoch auch jedes andere, dem Fachmann als sinnvoll erscheinende, Umsetzungsverhältnis denkbar. Hierbei stellt der Stellwinkel 102a den Winkel dar, um den die Rotationskörper 20a um ihrer Schwenkachse 30a relativ zu der Symmetrieachse 94a geschwenkt werden müssen, um in einem nachfolgenden Schnittprozess eine gewünschte Soll-Schnittlinie 104a erreichen bzw. schneiden zu können. Eine Schwenkbewegung des Bedienelements 48a wird über die Schwenkeinheit 28a bzw. die Verstelleinheit 44a an die Rotationskörper 20a weitergegeben, wodurch diese ebenfalls um den Stellwinkel 102a verstellt werden.

Ferner wird mit dem Bedienelement 48a die Arretiereinheit 34a, die dazu vorgesehen ist, die Rotationskörper 20a zu arretieren, bedient. Mittels einer Kippbewegung um eine Drehachse 106a des Bedienelements 48a arretiert ein hier nicht näher dargestelltes Feststellelement die Rotationskörper 20a, so dass eine Schwenkbewegung um die Schwenkachse 30a unterbunden wird. Zudem ist jedem Rotationskörper 20a ein Federelement 108a einer Federeinheit 36a, die dazu vorgesehen ist, die Rotationskörper 20a federnd zu lagern, zugeordnet.

Will der Bediener nun einen Schnittprozess ausführen, stellt er über das Bedienelement 48a den gewünschten Stellwinkel 102a ein. Damit schwenkt er die Rotationskörper 20a ebenso um den Stellwinkel 102a und die Handwerkzeugmaschine 10a kann durch einen Bediener leicht in Richtung der Soll-Schnittlinie 104a geführt werden. Es können gerade Schnitte gesägt werden. Auch gezackte Schnitte können so gesägt werden, da beispielsweise an einem Wendepunkt des Schnitts vor einem Beginn des Schnittprozesses Löcher in das Werkstück 12a eingebracht werden können, auf deren Schnitthöhe der Stellwinkel 102a neu eingestellt werden kann und das Werkzeug 14a bzw. das Sägeblatt indirekt über die Ausrichtung der Rotationskörper 20a belastungsarm geschwenkt werden kann.

Für das Schneiden eines kurvigen Schnitts werden die vorderen und hintern Rotationskörper 20a entkoppelt. Hierbei sind je hinterem Rotationskörper 20a alternative, hier gestrichelt gezeichnete Einheiten, wie eine Schwenkeinheit 28a', eine Arretiereinheit 34a', eine Verstelleinheit 44a' und Elemente wie ein Bedienelement 48a' vorgesehen. Ferner entfällt das Gestänge 98a. Durch die Anordnung dieser zusätzlichen Einheiten und Elemente können der vordere und die hinteren Rotationskörper 20a unabhängig voneinander geschwenkt und arretiert werden.

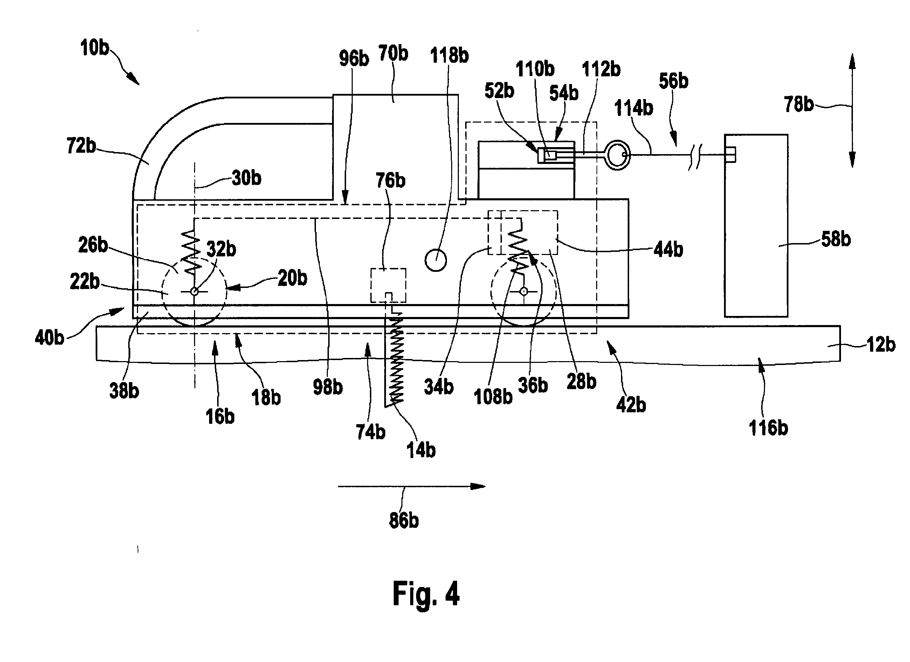

In den Figuren 4 bis 8 sind alternative Ausführungsbeispiele der Schutzvorrichtung 10a dargestellt. Im Wesentlichen sind gleich bleibende Bauteile, Merkmale und Funktionen grundsätzlich mit den gleichen Bezugszeichen beziffert. Zur Unterscheidung der Ausführungsbeispiele sind jedoch den Bezugszeichen der Ausführungsbeispiele die Buchstaben a und d hinzugefügt. Die nachfolgende Beschreibung beschränkt sich im Wesentlichen auf die Unterschiede zu dem Ausführungsbeispiel in den Figuren 1 bis 3, wobei bezüglich gleich bleibender Bauteile, Merkmale und Funktionen auf die Beschreibung des Ausführungsbeispiels in den Figuren 1 bis 3 verwiesen werden kann.

In der Figur 4 ist eine alternative Handwerkzeugmaschine 10b in einer Seitenansicht gezeigt. Die als Stichsäge ausgeführte Handwerkzeugmaschine 10b umfasst ein Gehäuse 70b mit einem Handgriff 72b, wobei in einem vom Handgriff 72b abgewandten Bereich 74b eine Werkzeugaufnahme 76b angeordnet ist, die ein geführtes, zu einer Zerspanung eines Werkstücks 12b vorgesehenes Werkzeug 14b in der Form eines Sägeblatts trägt. Ferner ist an die Handwerkzeugmaschine 10b im Bereich 74b einer Lagereinheit 16b angeordnet, die einstückig mit einer Seitenführungseinheit 18b ausgebildet ist. Die Lagereinheit 16b bzw. die Seitenführungseinheit 18b weist drei Rotationskörper 20b auf, die jeweils von einem Wälzkörper 22b, der ein Rad 26b darstellt, gebildet sind.

Die Rotationskörper 20b sind Bestandteile einer in der Handwerkzeugmaschine 10b angeordneten Stellvorrichtung 96b, die zudem eine Schwenkeinheit 28b, eine Arretiereinheit 34b, eine Federeinheit 36b, eine Verstelleinheit 44b, ein Steuermittel 52b und eine Erfassungseinheit 54b umfasst. Das Steuermittel 52b steht über einen hier nicht im Detail gezeigten Mechanismus mit der Verstelleinheit 44b in Kontakt und ist dazu vorgesehen, eine Ausrichtung eines Rotationskörpers 20b mittels der Verstelleinheit 44b automatisch einzustellen. Die Erfassungseinheit 54b ist dazu vorgesehen, einen Einstellparameter zu erfassen. Das Steuermittel 52b und die Erfassungseinheit 54b sind einstückig und in der Form eines mechanischen Stellglieds 110b bzw. einer Feder ausgeführt. Das mechanische Stellglied 110b ist so gelagert, dass es in einem Schwenkbereich 100b geschwenkt werden kann. An das Stellglied 52b bzw. an die Erfassungseinheit 54b bzw. an das Stellglied 110b ist ein Aufhängungselement 112b angeordnet, das das Steuermittel 52b bzw. die Erfassungseinheit 54b mit einem Übertragungsmittel 56b, das dazu vorgesehen ist, einen Einstellparameter auf das Steuermittel 52b bzw. die Erfassungseinheit 54b zu übertragen, verbindet. Das Übertragungsmittel 56b stellt ein mechanisches Übertragungsmittel in der Form einer unter mechanischer Spannung stehenden Zugschnur 114b dar und verbindet das Steuermittel 52b bzw. die Erfassungseinheit 54b bzw. die Handwerkzeugmaschine 10b mit einer Bezugseinheit 58b, die dazu vorgesehen ist, zumindest ein Bezugssignal für die Erfassungseinheit 54b bzw. das Steuermittel 52b zu bilden. Die Bezugseinheit 58b stellt einen Ankerpunkt dar, ist von einem manuell plazierbaren Element wie einem Klemmelement in der Form einer Schraubzwinge gebildet und markiert einen Endpunkt 116b einer Soll-Schnittlinie 104b. Die Handwerkzeugmaschine 10b und die Bezugseinheit 58b bilden ein System.

Will der Bediener nun einen Schnittprozess ausführen, markiert er auf dem Werkstück 12b mittels der Bezugseinheit 58b den Endpunkt 116b der Soll-Schnittlinie 104b. Das Stellglied 110b bzw. die Erfassungseinheit 54b ermittelt nun über seine bzw. ihre eigene Auslenkung die Ausrichtung der Zugschnur 114b und somit einen Stellwinkel 102b d.h. eine Abweichung von einer im Moment eingestellten Schnittrichtung bzw. die momentane Ausrichtung der Rotationskörper 20b von dem Verlauf der Zugschnur 114b bzw. der Soll-Schnittlinie 104b. Der so ermittelte Stellwinkel 102b wird von der Erfassungseinheit 54b bzw. dem Steuermittel 52b über den hier nicht näher beschriebenen Mechanismus und die Schwenkeinheit 28b bzw. die Verstelleinheit 44b an die Rotationskörper 20b weitergegeben, wodurch diese ebenfalls um den Stellwinkel 102b verstellt werden. Zum Feststellen des eingestellten Stellwinkels 102b kann die Arretiereinheit 34b mittels eines Knopfs 118b vom Bediener aktiviert werden. Durch den beschriebenen Mechanismus kann die Handwerkzeugmaschine 10b durch einen Bediener leicht in Richtung der Soll-Schnittlinie 104b geführt werden, wodurch ein gerader Schnitt gesägt werden kann.

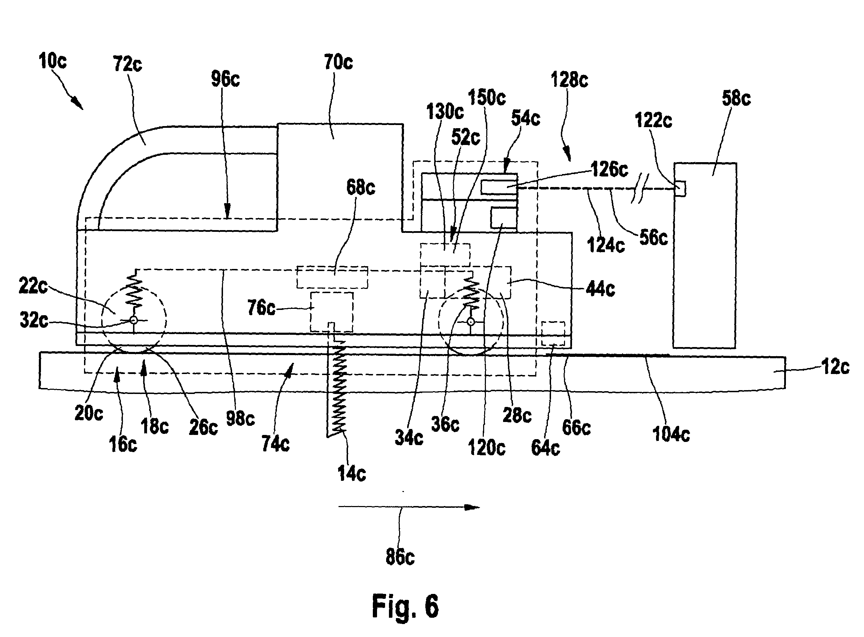

In der Figur 6 ist eine alternative Handwerkzeugmaschine 10c in einer Seitenansicht gezeigt. Die als Stichsäge ausgeführte Handwerkzeugmaschine 10c umfasst ein Gehäuse 70c mit einem Handgriff 72c. In einem vom Handgriff 72c abgewandten Bereich 74c ist eine Werkzeugaufnahme 76c angeordnet, die ein geführtes, zu einer Zerspanung eines Werkstücks 12c vorgesehenes Werkzeug 14c in der Form eines Sägeblatts trägt. Ferner ist an die Handwerkzeugmaschine 10c im Bereich 74c eine Lagereinheit 16c angeordnet, die einstückig mit einer Seitenführungseinheit 18c ausgebildet ist. Die Lagereinheit 16c bzw. die Seitenführungseinheit 18c weist drei Rotationskörper 20c auf, die jeweils von einem Wälzkörper 22c, der ein Rad 26c darstellt, gebildet sind.

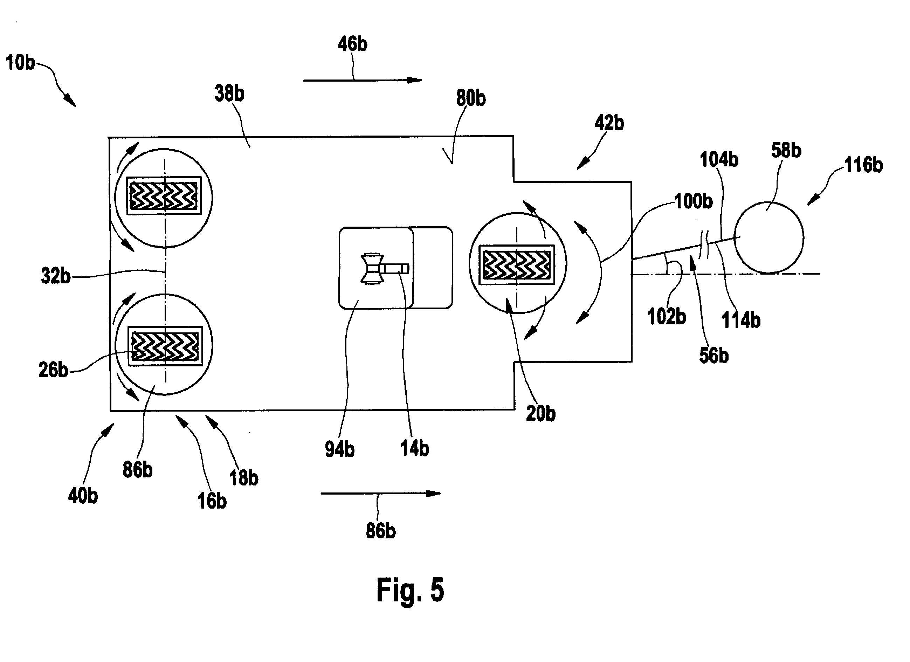

Die Handwerkzeugmaschine 10c weist eine Stellvorrichtung 96c auf, die neben den in den vorhergehenden Ausführungsbeispielen beschriebenen Einheiten (28c, 34c, 36c, 44c) ein alternatives Steuermittel 52c, eine alternative Erfassungseinheit 54c und eine Sendeeinheit 120c hat. Die Sendeeinheit 120c ist dazu vorgesehen, ein Signal, das von einer Bezugseinheit 58c aufgenommen und/oder ausgewertet werden kann, auszusenden und ist von einer Lichtquelle, die Lichtstrahlen aussendet, gebildet. Zumindest einer der ausgesendeten Lichtstrahlen trifft auf die Bezugseinheit 58c, die einen Reflektor 122c aufweist, der den Lichtstrahl reflektiert. Der reflektierte Lichtstrahl 124c bildet ein optisches Übertragungsmittel 56c, das eine Positionsinformation der Bezugseinheit 58c von dieser auf die Erfassungseinheit 54c überträgt. Die Erfassungseinheit 54c ist dazu vorgesehen, einen Einstellparameter zu erfassen und an ein Steuermittel 52c weiterzuleiten und ist von einem Sensor 126c gebildet. Der Sensor 126c ist in Richtung der Bezugseinheit 58c ausgerichtet und deckt einen Sensorbereich 128c ab, in dem die Bezugseinheit 58c angeordnet werden kann und der einen hier nicht gezeigten Messbereich aufweist, der analog zu dem in Figur 5 dargestellten Schwenkbereich 100b verläuft. Der Sensor 126c leitet das ermittelte Signal an das Steuermittel 52c, das als eine Recheneinheit 130c ausgebildet ist, weiter. Das Steuermittel 52c steht mit der Verstelleinheit 44c bzw. der Schwenkeinheit 28c in Kontakt, die die Rotationskörper 20c verstellt. Hierbei kann das Verstellen der hinteren Rotationsköper 20c über ein Gestänge 98c erfolgen und/oder per Funksignal an die hier nicht gezeigte Verstelleinheit bzw. Schwenkeinheit der hinteren Rotationskörper 20c vermittelt werden.

Will der Bediener nun einen Schnittprozess ausführen, markiert er auf dem Werkstück 12c mittels der Bezugseinheit 58c den Endpunkt 116c einer Soll-Schnittlinie 104c. Die Sendeeinheit 120c sendet Lichtstrahlen aus, von denen zumindest einer auf den Reflektor 122c der Bezugseinheit 58c trifft. Der Reflektor 122c reflektiert den Lichtstrahl und leitet diesen wiederum als gerichteter Lichtstrahl 124c bzw. als Übertragungsmittel 56c an den Sensor 126c der Erfassungseinheit 54c weiter. Die Recheneinheit 130c des Steuermittels 52c ermittelt nun einen hier nicht gezeigten Stellwinkel, der analog zu dem Stellwinkel 102b der Figur 5 ist, und damit eine Abweichung von einer momentan eingestellten Schnittrichtung zu einem Verlauf des gerichteten Lichtstrahls 124c bzw. der Soll-Schnittlinie 104c. Der so ermittelte Stellwinkel wird von der Erfassungseinheit 54c bzw. dem Steuermittel 52c über die Verstelleinheit 44c an die Rotationskörper 20c weitergegeben, wodurch diese ebenfalls um den Stellwinkel verstellt werden. Durch den beschriebenen Mechanismus kann die Handwerkzeugmaschine 10c durch einen Bediener leicht in Richtung der Soll-Schnittlinie 104c geführt werden, wodurch ein gerader Schnitt gesägt werden kann. Diese Führung wird durch eine Anordnung einer Projektionsvorrichtung 64c, in der Form eines Lasers, die dazu vorgesehen ist, eine Markierung 66c auf das Werkstück 12c zu projizieren, erleichtert. Die Markierung 66c entspricht der Soll-Schnittlinie 104c und signalisiert einem Bediener die Schnittlinie, die mit dem an den Rotationskörpern 20c eingestellten Stellwinkel gesägt werden wird.

Ferner weist die Handwerkzeugmaschine 10c eine Stelleinheit 68c auf, die dazu vorgesehen ist, zu einem Einstellen eines Werkzeugs 14c einen Einstellparameter von einer Steuereinheit 150c zu beziehen. Die Stelleinheit 68c ist an der Werkzeugaufnahme 76c angeordnet und empfängt von der Steuereinheit 150c, die einstückig mit dem Steuermittel 52c ausgebildet ist, Verstellinformationen um das Werkzeug 14c um einen Einstellwinkel, der abhängig von dem Stellwinkel der Rotationskörper 20c ist, einzustellen.

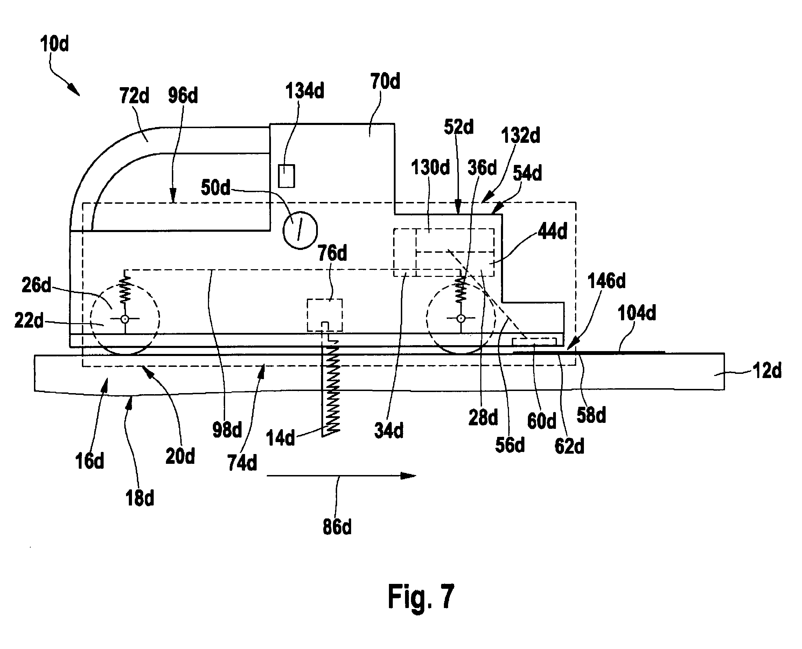

In der Figur 7 ist eine alternative Handwerkzeugmaschine 10d in einer Seitenansicht gezeigt. Die als Stichsäge ausgeführte Handwerkzeugmaschine 10d umfasst ein Gehäuse 70d mit einem Handgriff 72d, wobei in einem vom Handgriff 72d abgewandten Bereich 74d eine Werkzeugaufnahme 76d angeordnet ist, die ein geführtes, zu einer Zerspanung eines Werkstücks 12d vorgesehenes Werkzeug 14d in der Form eines Sägeblatts trägt. Ferner ist an die Handwerkzeugmaschine 10d im Bereich 74d eine Lagereinheit 16d angeordnet, die einstückig mit einer Seitenführungseinheit 18d ausgebildet ist. Die Lagereinheit 16d bzw. die Seitenführungseinheit 18d weist drei Rotationskörper 20d auf, die jeweils von einem Wälzkörper 22d, der ein Rad 26d darstellt, gebildet sind.

Die Handwerkzeugmaschine 10d bzw. eine Stellvorrichtung 96d weist zu den in den vorhergehenden Ausführungsbeispielen beschriebenen Einheiten (28d, 34d, 36d, 44d) eine Eingabeeinheit 50d, die dazu vorgesehen ist, einen Einstellparameter an die Verstelleinheit 44d bzw. die Schwenkeinheit 28d weiterzuleiten, und eine Erfassungseinheit 54d in der Form einer Bewegungssensorikeinheit 132d auf, die dazu vorgesehen ist, eine Bewegung der Handwerkzeugmaschine 10d zu sensieren.

Will ein Bediener nun einen Schnittprozess ausführen, stellt er über die Eingabeeinheit 50d, die in der Form eines Drehschalters ausgebildet ist, eine gewünschte Ausrichtung der Handwerkzeugmaschine 10d bzw. der Rotationskörper 20d ein oder er definiert durch Betätigen eines Knopfs 134d die momentan eingestellte Ausrichtung der Handwerkzeugmaschine 10d bzw. der Rotationskörper 20d als gewünschte Ausrichtung. Beim Ausführen des Schnitts nimmt nun die Bewegungssensorikeinheit 132d, die Rotationskörper, die einstückig mit den Rotationskörpern 20d ausgebildet sind und eine Recheneinheit, die einstückig mit dem Steuermittel 52d ausgeführt ist, aufweist, eine Bewegung auf und ermittelt eine aktuell abgefahrene Bewegungsrichtung, die mit einer Längserstreckungsrichtung 86d übereinstimmt. Die Bewegungssensorikeinheit 132d könnte auch Rotationsköper sein, die unabhängig von den Rotationskörpern 20d ausgeführt sind, und/oder einen optischen Sensor und/oder eine anderer dem Fachmann als zweckdienlich erscheinende Sensorik aufweisen. Ermittelt nun die Bewegungssensorikeinheit 132d eine Abweichung der Bewegungsrichtung von einer gewünschten Soll-Schnittlinie 104d, justiert das Steuermittel 52d über die Verstelleinheit 44d bzw. die Schwenkeinheit 28d die Rotationskörper 20d nach. Durch den beschriebenen Mechanismus kann die Handwerkzeugmaschine 10d durch einen Bediener leicht in Richtung der Soll-Schnittlinie 104d geführt werden, wodurch ein gerader Schnitt gesägt werden kann.

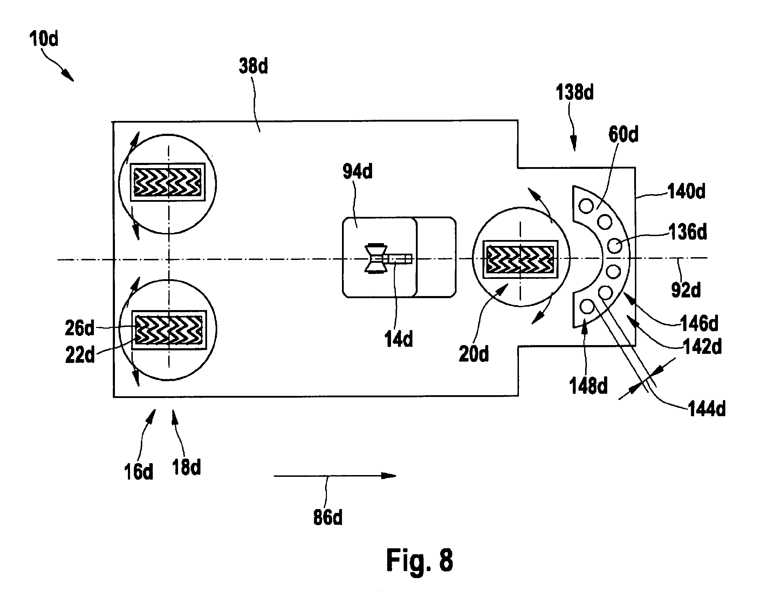

Wird die Eingabeeinheit 50d nicht eingestellt oder der Knopf 134d nicht betätigt, ist zum Einstellen der Rotationskörper 20d an der Handwerkzeugmaschine 10d ferner eine Detektoreinheit 60d angeordnet, die dazu vorgesehen ist, eine auf ein zu bearbeitendes Werkstück 12d aufgebrachte Markierung 62d zu detektieren. Die Markierung 62d stellt zugleich eine Bezugseinheit 58d dar. Die Detektoreinheit 60d weist mehrere Sensoren 136d auf, die im Bereich 138d zwischen dem vorderen Rotationskörper 20d und einem in einer Längserstreckungsrichtung 86d gesehen vorderen Rand 140d der Handwerkzeugmaschine 10d in einem Teilkreis 142d in jeweils einem gleichmäßigen Abstand 144d zueinander angeordnet sind. Die Anordnung der Sensoren 136d wäre auch in einem unregelmäßigen Abstand 144d zueinander denkbar. Ferner bilden die Sensoren 136d eine symmetrisch um die Symmetrieachse 92d der Handwerkzeugmaschine 10d verteilte Anordnung (siehe Figur 8). Der Teilkreis 142d stellt einen Erfassungsbereich 146d dar, in dem jeder Sensor 136d einen Sensorbereich 148d hat, der einen Winkelbereich aufweist, der sich von den Sensorbereichen 148d der anderen Sensoren 136d unterscheidet. Somit erfasst jeder Sensor 136d einen einzelnen Teilbereich des Erfassungsbereichs 146d und der gesamte Erfassungsbereich 146d setzt sich aus einer Summe der Sensorbereiche 148d zusammen. Es wäre jedoch auch möglich, dass sich die Sensorbereiche 148d zweier direkt benachbarter Sensoren 136d in ihren Flanken überschneiden. Die Detektoreinheit 60d übermittelt mittels eines Übertragungsmittels 56d in der Form eines Funksignals, je nachdem welcher der Sensoren 136d der Detektoreinheit 60d die Markierung 62d detektiert, ein Positionssignal der Markierung 62d an die Recheneinheit 130d. Das Steuermittel 52d veranlasst nun unter Berücksichtigung der durch die Bewegungssensorikeinheit 132d erfassten Position der Handwerkzeugmaschine 10d die Verstelleinheit 44d bzw. die Schwenkeinheit 28d die Rotationskörper 20d einzustellen, so dass eine Soll-Schnittlinie 104d mit der Markierung 62d übereinstimmt, wodurch ein gerader und ein gekrümmter Schnitt gesägt werden kann. Hierbei kann das Verstellen der hinteren Rotationskörper 20d über ein Gestänge 98d erfolgen und/oder per Funksignal an die hier nicht gezeigte Verstelleinheit bzw. Schwenkeinheit der hinteren Rotationskörper 20d vermittelt werden.

## Patentansprüche

1. Handwerkzeugmaschine, insbesondere für ein geführtes, zu einer Zerspanung eines Werkstücks (12a-d) vorgesehenes Werkzeug (14a-d), mit einer Lagereinheit (16a-d), die zu einer Lagerung und zu einer Abstützung der Handwerkzeugmaschine vorgesehen ist, und mit einer Seitenführungseinheit (18a-d), wobei die Lagereinheit (16a-d) zumindest teilweise einstückig mit der Seitenführungseinheit (18a-d) ausgebildet ist und wobei die Seitenführungseinheit (18a-d) und die Lagereinheit (16a-d) zumindest einen Rotationskörper (20a-d) aufweisen, **gekennzeichnet durch** eine Verstelleinheit (44a-d), die dazu vorgesehen ist, eine Vorzugsrichtung (46a-d) des zumindest einen Rotationskörpers (20a-d) einzustellen.

2. Handwerkzeugmaschine nach Anspruch 1, **dadurch gekennzeichnet, dass** der Rotationskörper (20a-d) von einem Wälzkörper (22a-d) gebildet ist.

3. Handwerkzeugmaschine zumindest nach Anspruch 1, **dadurch gekennzeichnet, dass** der Rotationskörper (20a-d) eine Rolle (24a) und/oder ein Rad (26b-d) darstellt.

4. Handwerkzeugmaschine nach einem der vorhergehenden Ansprüche, **gekennzeichnet durch** eine Schwenkeinheit (28a-d), die dazu vorgesehen ist, zumindest einen Rotationskörper (20a-d) um eine Schwenkachse (30a-d) neben seiner Drehachse (32a-d) zu bewegen.

5. Handwerkzeugmaschine nach einem der vorhergehenden Ansprüche, **gekennzeichnet durch** eine Arretiereinheit (34a-d), die dazu vorgesehen ist, zumindest einen Rotationskörper (20a-d) zu arretieren.

6. Handwerkzeugmaschine nach einem der vorhergehenden Ansprüche, **gekennzeichnet durch** eine Federeinheit (36a-d), die dazu vorgesehen ist, zumindest einen Rotationskörper (20a-d) federnd zu lagern.

7. Handwerkzeügmaschine zumindest nach Anspruch 1, **gekennzeichnet durch** zumindest eine Grundplatte (38a-d), an der zumindest zwei Rotationskörper (20a-d) an zumindest zwei unterschiedlichen Positionen (40a, 40b, 40c, 40d; 42a, 42b, 42c, 42d) beabstandet zueinander in einer Längserstreckungsrichtung (86 a-d) der Grundplatte (38a-d) angeordnet sind.

8. Handwerkzeugmaschine zumindest nach Anspruch 1, **gekennzeichnet durch** zumindest ein Bedienelement (48a), das dazu vorgesehen ist, zumindest die Verstelleinheit (44a) einzustellen.

9. Handwerkzeugmaschine zumindest nach Anspruch 1, **gekennzeichnet durch** eine Eingabeeinheit (50d), mittels der ein Einstellparameter eingebbar ist und die dazu vorgesehen ist, zumindest einen Einstellparameter an zumindest die Verstelleinheit (44d) weiterzuleiten.

10. Handwerkzeugmaschine zumindest nach Anspruch 1, **gekennzeichnet durch** zumindest ein mit zumindest der Verstelleinheit (44b-d) in Kontakt stehendes Steuermittel (52b-d), das dazu vorgesehen ist, zumindest eine Ausrichtung zumindest eines Rotationskörpers (20b-d) mittels der Verstelleinheit (44b-d) automatisch einzustellen.

11. Handwerkzeugmaschine zumindest nach Anspruch 10, **gekennzeichnet durch** eine Erfassungseinheit (54b-d), die dazu vorgesehen ist, zumindest einen Einstellparameter zu erfassen und/oder an das Steuermittel (52b-d) weiterzuleiten.

12. Handwerkzeugmaschine zumindest nach Anspruch 10, **gekennzeichnet durch** zumindest ein Übertragungsmittel (56b-d), das dazu vorgesehen ist, zumindest einen Einstellparameter auf zumindest das steuermittel (52b-d) zu übertragen.

13. Handwerkzeugmaschine zumindest nach Anspruch 11, **gekennzeichnet durch** eine Bezugseinheit (58b-d), die dazu vorgesehen ist, zumindest ein Bezugssignal für die Erfassungseinheit (54b-d) zu bilden.

## Claims

1. Portable power tool, especially for a guided tool (14a-d) provided for machining a workpiece (12a-d), comprising a support unit (16a-d) which is provided for mounting and for supporting the portable power tool, and comprising a lateral guide unit (18a-d), wherein the support unit (16a-d) is designed at least partly in one piece with the lateral guide unit (18a-d), and wherein the lateral guide unit (18a-d) and the support unit (16a-d) have at least one rotary body (20a-d), **characterized by** an adjusting unit (44a-d) which is provided for setting a preferred direction (46a-d) of the at least one rotary body (20a-d).

2. Portable power tool according to Claim 1, **characterized in that** the rotary body (20a-d) is formed by a rolling element (22a-d).

3. Portable power tool at least according to Claim 1, **characterized in that** the rotary body (20a-d) constitutes a roller (24a) and/or a wheel (26b-d).

4. Portable power tool according to one of the preceding claims, **characterized by** a pivoting unit (28a-d) which is provided for moving at least one rotary body (20a-d) about a pivot axis (30a-d) in addition to the rotation axis (32a-d) thereof.

5. Portable power tool according to one of the preceding claims, **characterized by** a locking unit (34a-d) which is provided for locking at least one rotary body (20a-d).

6. Portable power tool according to one of the preceding claims, **characterized by** a spring unit (36a-d) which is provided for elastically mounting at least one rotary body (20a-d).

7. Portable power tool at least according to Claim 1, **characterized by** at least one base plate (38a-d), on which at least two rotary bodies (20a-d) are arranged in at least two different positions (40a, 40b, 40c, 40d; 42a, 42b, 42c, 42d) at a distance apart in a longitudinal extent direction (86a-d) of the base plate (38a-d).

8. Portable power tool at least according to Claim 1, **characterized by** at least one operating element (48a) which is provided for setting at least one adjusting unit (44a).

9. Portable power tool at least according to Claim 1, **characterized by** an input unit (50d), by means of which a setting parameter can be input and which is provided for transmitting at least one setting parameter to at least the adjusting unit (44d).

10. Portable power tool at least according to Claim 1, **characterized by** at least one control means (52b-d) which is in contact with at least the adjusting unit (44b-d) and which is provided for automatically setting at least one orientation of at least one rotary body (20b-d) by means of the adjusting unit (44b-d).

11. Portable power tool at least according to Claim 10, **characterized by** a detecting unit (54b-d) which is provided for detecting at least one setting parameter and/or for transmitting said setting parameter to the control means (52b-d).

12. Portable power tool at least according to Claim 10, **characterized by** at least one transmission means (56b-d) which is provided for transmitting at least one setting parameter to at least the control means (52b-d).

13. Portable power tool at least according to Claim 11, **characterized by** a reference unit (58b-d) which is provided for forming at least one reference signal for the detecting unit (54b-d).

## Revendications

1. Machine-outil portative, en particulier pour un outil (14a-d) prévu pour un travail par enlèvement de copeaux sur une pièce (12a-d), comprenant une unité de palier (16a-d), qui est prévue pour l'appui sur palier et le support de la machine-outil portative, et comprenant une unité de guidage latéral (18a-d), l'unité de palier (16a-d) étant réalisée au moins en partie d'une seule pièce avec l'unité de guidage latéral (18a-d) et l'unité de guidage latéral (18a-d) et l'unité de palier (16a-d) présentant au moins un corps rotatif (20a-d), **caractérisée par** une unité de réglage (44a-d), qui est prévue pour ajuster une direction préférentielle (46a-d) de l'au moins un corps rotatif (20a-d).

2. Machine-outil portative selon la revendication 1, **caractérisée en ce que** le corps rotatif (20a-d) est formé par un corps de roulement (22a-d).

3. Machine-outil portative selon au moins la revendication 1, **caractérisée en ce que** le corps rotatif (20a-d) est constitué par un rouleau (24a) et/ou une roue (26b-d).

4. Machine-outil portative selon l'une quelconque des revendications précédentes, **caractérisée par** une unité pivotante (28a-d) qui est prévue pour déplacer au moins un corps rotatif (20a-d) autour d'un axe de pivotement (30a-d) à côté de son axe de rotation (32a-d).

5. Machine-outil portative selon l'une quelconque des revendications précédentes, **caractérisée par** une unité de blocage (34a-d), qui est prévue pour bloquer au moins un corps rotatif (20a-d).

6. Machine-outil portative selon l'une quelconque des revendications précédentes, **caractérisée par** une unité de ressort (36a-d), qui est prévue pour supporter sur ressort au moins un corps rotatif (20a-d).

7. Machine-outil portative selon au moins la revendication 1, **caractérisée par** au moins une plaque de base (38a-d), sur laquelle sont disposés au moins deux corps rotatifs (20a-d) en au moins deux positions différentes (40a, 40b, 40c, 40d ; 42a, 42b, 42c, 42d) espacées les unes des autres dans une direction d'étendue longitudinale (86a-d) de la plaque de base (38a-d).

8. Machine-outil portative selon au moins la revendication 1, **caractérisée par** au moins un élément de contrôle (48a), qui est prévu pour ajuster au moins l'unité de réglage (44a).

9. Machine-outil portative selon au moins la revendication 1, **caractérisée par** une unité de saisie (50d), au moyen de laquelle un paramètre d'ajustement peut être saisi, et qui est prévue pour transmettre au moins un paramètre d'ajustement à au moins l'unité de réglage (44d).

10. Machine-outil portative selon au moins la revendication 1, **caractérisée par** au moins un moyen de commande (52b-d) en contact avec au moins l'unité de réglage (44b-d), qui est prévu pour ajuster automatiquement au moins une orientation d'au moins un corps rotatif (20b-d) au moyen de l'unité de réglage (44b-d).

11. Machine-outil portative selon au moins la revendication 10, **caractérisée par** une unité de détection (54b-d), qui est prévue pour détecter au moins un paramètre d'ajustement et/ou pour le communiquer au moyen de commande (52b-d).

12. Machine-outil portative selon au moins la revendication 10, **caractérisée par** au moins un moyen de transmission (56b-d) qui est prévu pour transmettre au moins un paramètre d'ajustement à au moins le moyen de commande (52b-d).

13. Machine-outil portative selon au moins la revendication 11, **caractérisée par** une unité de référence (58b-d) qui est prévue pour créer au moins un signal de référence pour l'unité de détection (54b-d).
